# DEMANDE DE BREVET EUROPEEN

(11) **EP 4 748 653 A1**
(43) Date de publication de la demande: **27.05.2026**
(21) Numéro de dépôt: 25209402.4
(22) Date de dépôt: 17.10.2025
(51) Int. Cl.: B60R 19/48, B62D 35/00

(54) **AGENCEMENT D'UNE PARTIE AVANT DE VÉHICULE AUTOMOBILE COMPORTANT UN CANAL D'ÉCOULEMENT D'AIR**

(30) Priorité: 22.11.2024 FR 2412813
(71) Demandeur: Renault s.a.s, 92100 Boulogne Billancourt (FR)
(72) Inventeur: DE-GREGORIO-ALONSO, Manuel, 47008 Valladolid (ES); FERNANDEZ, Daniel, 47008 Valladolid (ES); GONZALEZ-GINEL, Sofia, 47008 Valladolid (ES); TOMAS, Alberto, 47008 Valladolid (ES)

(57) **Abrégé**

L'invention concerne un agencement (1) d'une partie avant d'un véhicule, notamment une automobile, l'agencement comprenant un bouclier (2), un bloc d'éclairage (3), un dispositif de fixation (4) destiné notamment à l'assemblage du bouclier au bloc d'éclairage, et un canal (5) d'écoulement d'air réalisé le long du bouclier, par le dispositif de fixation et le bouclier.

L'invention concerne également un véhicule comportant un tel agencement.

## Description

### Domaine technique de l'invention

L'invention est du domaine des véhicules automobiles et plus particulièrement du domaine de la conception des éléments de carrosserie, tel un bouclier avant comportant au moins un bloc optique et un canal d'écoulement d'air. L'invention a trait à un agencement comportant un bouclier, un bloc d'éclairage et un dispositif de fixation destiné à l'assemblage du bouclier au bloc d'éclairage. L'invention concerne un véhicule ayant un tel agencement.

### Etat de la technique antérieure

Un véhicule, en particulier un véhicule automobile, comprend généralement des éléments aérodynamiques visant à réduire la consommation en énergie. A titre d'exemple, il est connu de créer au niveau de la partie frontale du véhicule des ouvertures au travers desquelles l'air est apte à circuler afin de réduire le coefficient de pénétration dans l'air du véhicule en mouvement.

Certains véhicules comprennent ainsi au niveau du bouclier avant, des ouvertures d'air débouchant dans le compartiment moteur afin de refroidir les composants qu'il contient, ou dans des conduites d'écoulement d'air évacuant l'air hors du véhicule, par exemple par le dessous du véhicule ou par les côtés latéraux.

Un véhicule comprenant une conduite d'évacuation d'air requiert au moins une opération d'assemblage supplémentaire en bord de ligne d'assemblage, ce qui a une incidence sur le coût de fabrication du véhicule. En outre, lors de la conception du véhicule, l'ajout d'une conduite requiert également des interfaces de fixation au niveau des pièces environnantes, ce qui tend à complexifier la conception.

L'objet de l'invention tend à rendre la situation plus acceptable par l'apport d'une solution technique qui soit simple et frugale, tout en étant efficace en termes de réduction du coefficient aérodynamique.

### Présentation de l'invention

Le but de l'invention est de proposer un agencement d'une partie avant d'un véhicule, notamment une automobile, l'agencement comportant un bouclier, un bloc d'éclairage et un dispositif de fixation destiné notamment à l'assemblage du bouclier au bloc d'éclairage, remédiant aux inconvénients ci-dessus. A cet effet, l'agencement comprend un canal d'écoulement d'air réalisé le long du bouclier, par le dispositif de fixation et le bouclier.

### Résumé de l'invention

L'agencement objet de l'invention peut en outre comporter les caractéristiques suivantes prises séparément ou en combinaison entre elles :
- le dispositif de fixation comprend au moins deux parois d'assemblage au bouclier, notamment deux parois comportant en tout ou partie des zones destinées à l'assemblage par soudure à ultrasons du dispositif de fixation au bouclier, et une paroi distale reliant lesdites deux parois d'assemblage entre elles, de telle sorte que le canal d'écoulement d'air est réalisé par l'espace entre le bouclier et la paroi distale du dispositif de fixation,
- il comprend au moins une première interface destinée à la fixation du bloc d'éclairage au bouclier, l'au moins une première interface étant notamment réalisée sur le dispositif d'éclairage et/ou sur le bouclier,
- il comprend un écran de passage de roue et au moins une deuxième interface destinée à la fixation de l'écran,
- l'au moins une deuxième interface étant réalisée sur le dispositif de fixation,
- la paroi distale comprend une portion sensiblement verticale
- la portion sensiblement verticale est parallèle à une face intérieure du bouclier au regard de laquelle la paroi distale est disposée, au moins deux portions transversales, notamment une portion transversale supérieure et une portion transversale inférieure, lesdites portions transversales étant au moins en partie inclinées l'une par rapport à l'autre de telle sorte que le canal d'écoulement d'air est à section évolutive,
- la portion transversale supérieure est sensiblement rectiligne,
- la portion transversale inférieure comprend une partie avant inclinée vers la portion transversale supérieure et une partie arrière sensiblement parallèle à la portion transversale supérieure qui lui fait directement face,
- l'au moins une des parties avant et arrière de la portion transversale inférieure étant notamment rectiligne,
- le canal d'écoulement d'air comprend une section d'entrée d'air de dimension supérieure à une section de sortie d'air de telle sorte que la pression d'air en sortie du canal est destinée à être supérieure à la pression d'air en entrée,
- le dispositif de fixation comprend des moyens d'indexage de type centreur,
- les moyens d'indexage sont destiné au pré-positionnement du dispositif de fixation sur le bouclier,
- le dispositif de fixation comprend des moyens d'indexage de type support structurel au bloc d'éclairage,
- le dispositif de fixation est une pièce de renfort du bouclier,
- le dispositif de fixation étant réalisé par moulage d'une matière plastique d'épaisseur comprise entre 3 mm et 1 mm, préférentiellement de 2,5 mm, l'épaisseur étant notamment supérieure à l'épaisseur du bouclier,
- le bouclier comprend une ouverture au travers de laquelle est disposé le bloc d'éclairage
- le bloc d'éclairage est notamment destiné à l'éclairage diurne,
- le bloc d'éclairage s'étend de manière sensiblement affleurante au bouclier,
- le bloc d'éclairage est localement écarté d'un bord périphérique de l'ouverture, notamment d'un bord périphérique extérieur, afin de créer localement un passage au regard duquel est disposé l'entrée du canal d'écoulement d'air formé par l'ensemble constitué du dispositif de fixation et le bouclier

L'invention a aussi trait à un véhicule, notamment du type d'une automobile, comprenant un agencement comportant au moins en partie les caractéristiques susmentionnées.

### Présentation des figures

Ces objets, caractéristiques et avantages de la présente invention seront exposés en détail dans la description suivante d'un mode de réalisation d'un agencement d'un ouvrant faites à titre non-limitatif en relation avec les figures jointes parmi lesquelles :
- [Fig.1] est une représentation schématique partielle d'une partie avant d'un véhicule automobile vue de l'extérieur, selon l'agencement objet de l'invention,
- [Fig.2] est une autre représentation schématique de l'agencement selon une vue plus éloignée de la [Fig.1], un bloc d'éclairage ayant été retiré,
- [Fig.3] est une vue en perspective d'un dispositif de fixation, pris isolément, visible sur la [Fig.2],
- [Fig.4] est une vue en perspective de l'intérieur d'un bouclier équipé du dispositif de fixation de la [Fig.3] sur lequel un bloc d'éclairage va être fixé,
- [Fig.5] est une vue en perspective de l'intérieur d'un bouclier équipé du dispositif de fixation de la [Fig.3] sur lequel un écran de passage de roue va être fixé.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

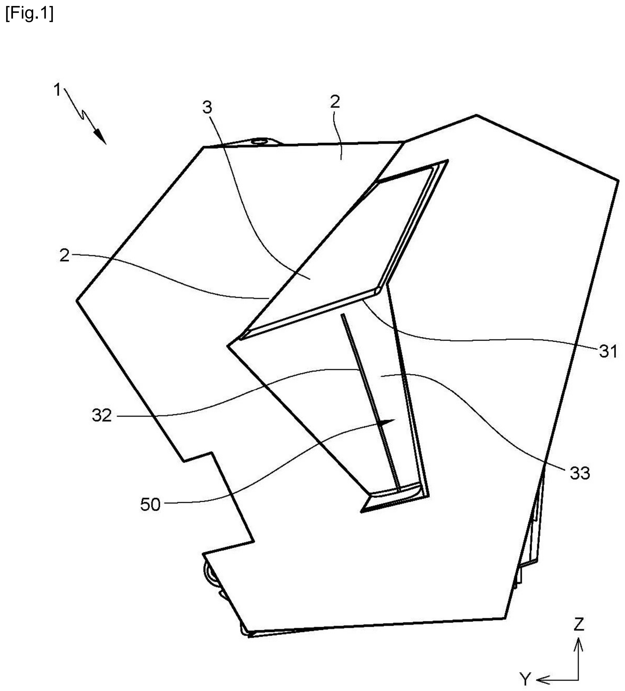

La [Fig.1] illustre schématiquement un bouclier avant 2, plus particulièrement la partie d'extrémité gauche du véhicule, qui comprend un bloc d'éclairage 3 de forme polygonale. La face extérieure du bloc d'éclairage 3 peut comprendre deux faces superposées et séparées par une arrête 31 approximativement horizontale. Le bloc d'éclairage 3 peut présenter une face extérieure tridimensionnelle et comprend une seconde arrête 32, qui peut s'étendre de manière sensiblement verticale. Le bloc d'éclairage 3 comprend préférentiellement les feux avant diurne. Il peut comprendre également au moins un élément clignotant. Le bouclier 2 comprend une ouverture sensiblement de forme complémentaire à celle du bloc d'éclairage, notamment de forme complémentaire d'un bord périphérie de la face extérieure du bloc d'éclairage. Un passage 50 destiné à l'écoulement d'air au travers du bouclier 2 est réalisé au niveau d'une zone latérale de l'ouverture 20. Le passage 50 est créé par l'écart entre le bord périphérique latéral, notamment une portion inférieure du bord périphérique latéral extérieur 33 du bloc d'éclairage 3, et l'ouverture 20 du bouclier 2. La portion 33 du bloc d'éclairage peut être inclinée vers l'arrière plus que la face adjacente du bloc 2 de telle sorte que la portion 33 guide l'air vers le passage 50 réalisé par l'écart local entre le bloc d'éclairage 3 et le bouclier 2.

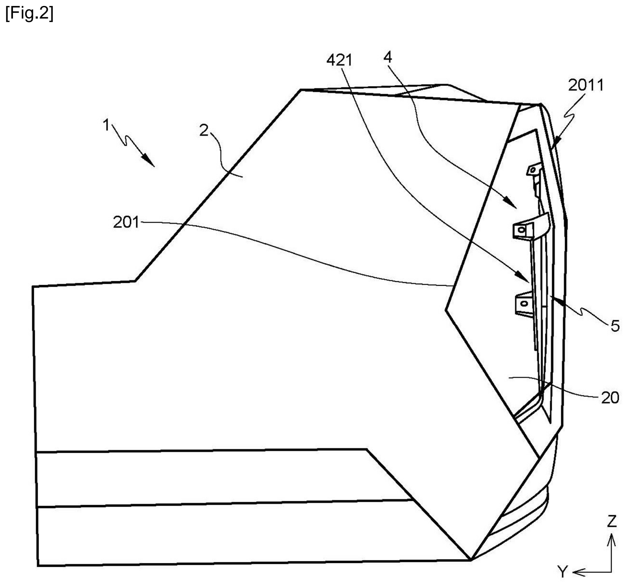

La [Fig.2] représente selon un zoom arrière le côté gauche du bouclier de la [Fig.1] auquel le bloc optique a été retiré de l'ouverture 20 afin de rendre visible un dispositif de fixation 4. Le dispositif de fixation 4 est positionné au niveau d'une face intérieure du bouclier 2, le long d'une portion d'extrémité latérale du bouclier qui s'étend de manière sensiblement longitudinale. Le dispositif de fixation 4 comprend une paroi distale 421 qui définit avec le bouclier 2, un canal 5 d'écoulement d'air. Un tel canal est destiné à la circulation d'un air destiné au refroidissement des éléments de freinage, en ce sens qu'il comprend une sortie d'air qui débouche à proximité d'une zone du passage de roue avant. Le bord périphérique 201 de l'ouverture 20 pratiquée dans le bouclier 2 comprend un bord périphérique extérieur 2011 qui est situé sensiblement au droit de l'entrée du canal 5.

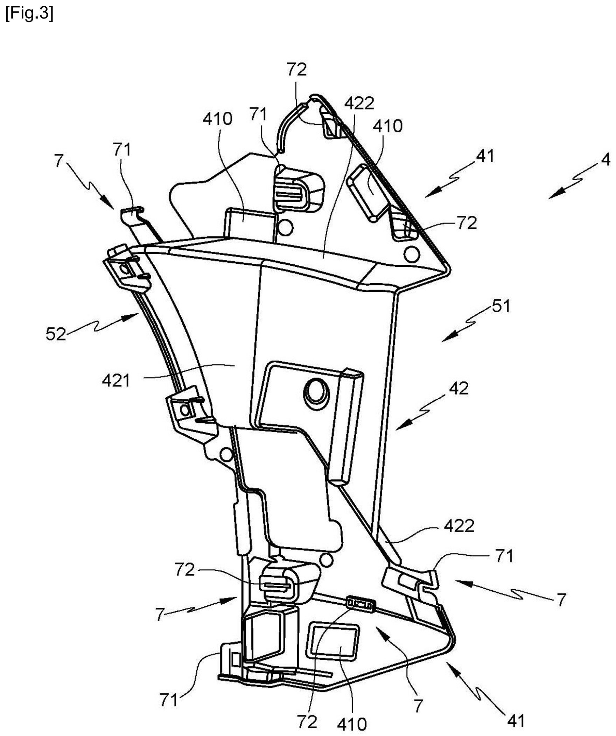

La [Fig.3] représente le dispositif de fixation 4 pris isolément afin de mettre en évidence sa conception particulière. Le dispositif de fixation 4 est sensiblement de section en oméga en ce sens qu'il comprend deux parois d'assemblage 41 reliées l'une à l'autre par une paroi distale 42. La paroi distale 42 comprend une portion sensiblement verticale 421 et parallèle à une face intérieure 21 du boulier au regard de laquelle la paroi distale est disposée, et au moins deux portions transversales 422, notamment une portion transversale supérieure et une portion transversale inférieure. De préférence, lesdites portions transversales sont au moins en partie inclinées l'une par rapport à l'autre de telle sorte que le canal 5 d'écoulement d'air est à section évolutive. Chacune des parois d'assemblage 41 comprend au moins une zone 410, sensiblement plane, destinée à venir en appui contre la face intérieure du bouclier de forme complémentaire. Chaque zone 410 peut être réalisée selon un profil sensiblement rectangulaire et s'étendre en saillie hors de la face extérieure de la paroi d'assemblage qui est destinée à venir en appui contre le bouclier. Chaque zone 410 est destinée à la liaison au bouclier 2 par un procédé de soudure à ultrasons. La face intérieure qui accueille le dispositif de fixation 4 peut comprendre également des zones dédiées à l'assemblage par soudures à ultrasons. Le dispositif de fixation 4 comprend une paroi d'assemblage 41 supérieure et une paroi d'assemblage 41 inférieure, chacune comprenant au moins une zone 410, préférentiellement deux zones 410 de sorte à parfaire l'assemblage du dispositif d'assemblage 4 et du bouclier 2 formant ainsi un module réalisé d'un seul tenant après soudure.

Le dispositif d'assemblage 4 comprend en outre un moyen d'indexage 7 comprenant des centreurs 71, 72 respectivement destinés au positionnement du dispositif de fixation 4 sur le bouclier 2 et au positionnement du bloc d'éclairage sur le dispositif de fixation 4. La particularité des centreurs 71 réside notamment dans leur conception visant à créer une contrainte mécanique dans l'assemblage du dispositif de fixation 4 et du bouclier 2. A cet effet, les centreurs 71 sont des lames déformables destinées à exercer une contrainte mécanique constante entre le dispositif de fixation 4 et le bouclier 2 sur lequel il est assemblé. Ainsi mis sous tension mécanique, les zones du dispositif de fixation 4 éloignés des zones 410 destinées à l'assemblage par soudure évitent à ce que tout régime vibratoire puisse être transmis au dispositif de fixation 4, par voie de conséquence à chacun des éléments assemblés au dispositif de fixation 4. Les centreurs 72 se présentent quant à eux sous la forme de plots de section sensiblement rectangulaire faisant saillie hors de la face intérieure des parois d'assemblage 41. Les centreurs 72 sont quant à eux destinés au positionnement du bloc d'éclairage 3 qui comprend des parties concaves afin de recouvrir chacun des plots selon un principe d'emboitement. De manière avantageuse, aucun autre élément de fixation n'est prévu pour l'assemblage du dispositif de fixation 4 au bouclier 2, ce qui tend à faciliter le procédé de montage et le temps d'assemblage puisque selon des opérations de positionnement et de soudure par ultrasons sont requis.

Le canal 5 définit par l'assemblage du dispositif de fixation 4 contre une face intérieure 21 du bouclier 2, comprend une entrée 51 et une sortie 52. La section de l'orifice d'entrée 51 d'air étant supérieure à l'orifice de sortie 52, le canal 5 est un convergent qui vise à mettre en pression de l'air circulant dans le canal 5, de telle sorte que l'air en sortie a une vitesse d'écoulement supérieure à celle en entrée.

La réduction de section le long du canal est évolutive. Pour ce faire, le dispositif de fixation 4 comprend une paroi sensiblement verticale 421, tout du moins destinée à s'étendre sensiblement parallèlement à la face intérieure 21 du bouclier 2, dont les arêtes supérieure et inférieure sont prolongées par des parois transversales 422. Les parois d'assemblage 41 supérieure et inférieure sont reliées respectivement à la paroi verticale 421 par l'intermédiaire d'une paroi transversale 422. Afin de créer la réduction de section du canal 5, les parois transversales 422 supérieure et inférieure sont inclinées l'une par rapport à l'autre, notamment en partie, comme cela est rendu visible en [Fig.3]. La conformation du dispositif de fixation 4 avec des parois transversales 422 permet la création d'une paroi distale 42 qui s'étend au regard de la face intérieure 21 du bouclier 2 pour créer le canal 5 d'écoulement d'air.

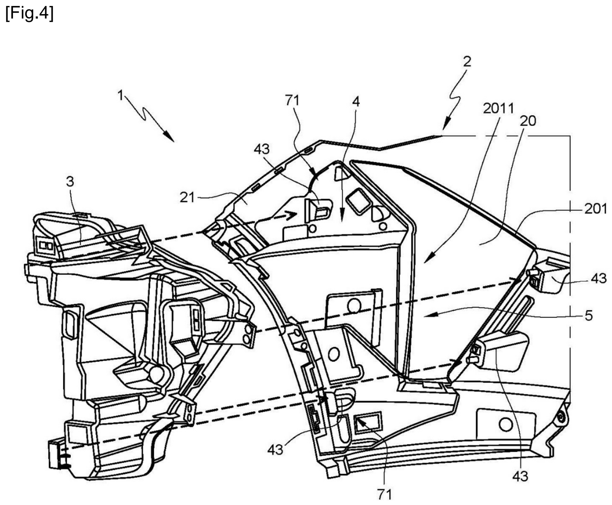

Le dispositif de fixation 4 est, du fait de sa rigidité obtenu par sa section transversale sensiblement en U, un élément de support structurel sur lequel sont assemblés un bloc d'éclairage 3, comme cela est rendu visible sur la [Fig.4]. Les traits en pointillés pointent vers les premières interfaces de fixation 43 qui appartiennent à l'agencement de l'invention. Pour partie, les interfaces de fixation 43 sont localisées au niveau du dispositif de fixation 4, elles sont en outre pour partie solidaires du bouclier 2, notamment par paire. Une portion intérieure du bord périphérique 201 de l'ouverture 20 comprend deux blocs saillant hors de la face intérieure 21 formant la première interface de fixation 43. La première interface de fixation 43 réalisée au niveau du dispositif de fixation 4 est confondue avec les centreurs 71, de telle sorte le bloc d'éclairage 3 comprend des pattes de fixation rendant apte son assemblage par vissage sur les centreurs du dispositif d'éclairage.

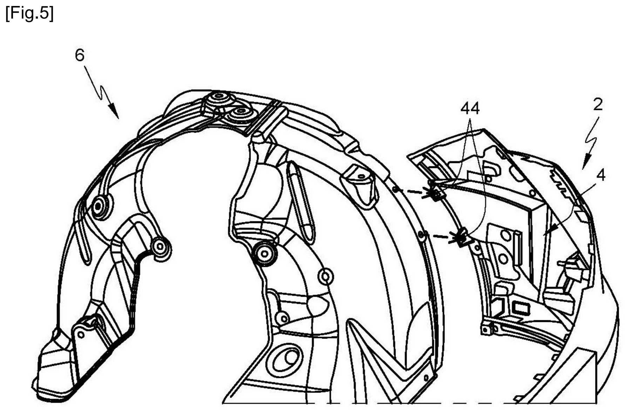

Selon un autre avantage, le dispositif de fixation 4 est le support structurel sur lequel est également fixé un écran 6 de passage de roue, comme cela est rendu visible sur la [Fig.5]. A cet effet, le dispositif de fixation 4 comprend à proximité de sa partie arrière des deuxièmes interfaces 44 de fixation destinée à l'assemblage de l'écran 6 de passage de roue qui comprend une portion de fixation jouxtant un bord extérieur de l'écran 6. Les traits en pointillés de la [Fig.5] mettent en évidence la partie du dispositif de fixation 4 sur laquelle l'écran 6 est rapporté. Une telle disposition permet de guider l'air capté par le canal 5 vers la roue avant du véhicule, afin d'améliorer le refroidissement des éléments de friction du dispositif de freinage associé.

L'écran 6 en tant que passage de roue avant présente un profil incurvé de telle sorte que le dispositif de fixation 4 comprend un profil arrière qui est de forme sensiblement complémentaire. Les deuxièmes interfaces 44 se présentent respectivement sous la forme d'équerre comprenant une paroi transversale contre laquelle l'écran 6 est rapporté et vissé. Les équerres s'étendant en saillie transversale hors de la paroi distale 42 comme cela est rendu visible sur la [Fig.3] et la [Fig.5]. Les deuxièmes interfaces 44 s'étendent en outre à proximité de la sortie 52, plus particulièrement de manière telle qu'elles jouxtent le bord arrière du dispositif de fixation 4.

En remarque, le dispositif de fixation 4 est un support structurel qui rigidifie le bouclier 2 dans sa portion latérale pour en faire une zone de fixation robuste sur laquelle le bloc d'éclairage 3 ainsi que l'écran 6 de passage de roue sont assemblés.

Le déplacement du véhicule comportant l'agencement précédemment décrit engendre un écoulement d'air au niveau de la portion inférieure du bord périphérique latéral extérieur 33 du bloc d'éclairage 3, qui circule ensuite au sein du canal 5 formé par l'assemblage du dispositif de fixation 4 sur la face intérieure 21 du bouclier 2, pour être ensuite dirigé vers le passage de roue. Du fait de la circulation d'air au travers du bouclier, le coefficient de pénétration dans l'air du véhicule est réduit, ce qui contribue favorablement à la réduction de la consommation d'énergie du véhicule.

## Revendications

1. Agencement (1) d'une partie avant d'un véhicule, notamment une automobile, l'agencement comprenant un bouclier (2), un bloc d'éclairage (3) et un dispositif de fixation (4) destiné notamment à l'assemblage du bouclier au bloc d'éclairage, **caractérisé en ce qu'**il comprend un canal (5) d'écoulement d'air réalisé le long du bouclier, par le dispositif de fixation et le bouclier.

2. Agencement (1) selon la revendication précédente, **caractérisé en ce que** le dispositif de fixation (4) comprend au moins deux parois d'assemblage (41) au bouclier, notamment deux parois comportant en tout ou partie des zones (410) destinées à l'assemblage par soudure à ultrasons du dispositif de fixation (4) au bouclier (2), et une paroi distale (42) reliant lesdites deux parois d'assemblage (41) entre elles, de telle sorte que le canal d'écoulement d'air est réalisé par l'espace entre le bouclier et la paroi distale du dispositif de fixation.

3. Agencement (1) selon la revendication 1 ou 2, **caractérisé en ce qu'**il comprend au moins une première interface (43) destinée à la fixation du bloc d'éclairage (4) au bouclier (2), l'au moins une première interface (43) étant notamment réalisée sur le dispositif d'éclairage (4) et/ou sur le bouclier (2).

4. Agencement (1) selon l'une des revendications précédentes, **caractérisé en ce qu'**il comprend un écran (6) de passage de roue et au moins une deuxième interface (44) destinée à la fixation de l'écran (6), l'au moins une deuxième interface (44) étant réalisée sur le dispositif de fixation (4).

5. Agencement (1) selon au moins l'une des revendications 1, 3 et 4 en combinaison avec la revendication 2, **caractérisé en ce que** la paroi distale (42) comprend une portion sensiblement verticale (421) et parallèle à une face intérieure (21) du bouclier au regard de laquelle la paroi distale est disposée, au moins deux portions transversales (422), notamment une portion transversale supérieure et une portion transversale inférieure, lesdites portions transversales étant au moins en partie inclinées l'une par rapport à l'autre de telle sorte que le canal (5) d'écoulement d'air est à section évolutive.

6. Agencement (1) selon la revendication précédente, **caractérisé en ce que** la portion transversale supérieure est sensiblement rectiligne, et **en ce que** la portion transversale (422) inférieure comprend une partie avant inclinée vers la portion transversale supérieure et une partie arrière sensiblement parallèle à la portion transversale supérieure qui lui fait directement face, l'au moins une des parties avant et arrière de la portion transversale (422) inférieure étant notamment rectiligne.

7. Agencement (1) selon l'une des revendications précédentes, **caractérisé en ce que** le canal (5) d'écoulement d'air comprend une section d'entrée d'air (51) de dimension supérieure à une section de sortie d'air (52) de telle sorte que la pression d'air en sortie du canal est destinée à être supérieure à la pression d'air en entrée.

8. Agencement (1) selon l'une des revendications précédentes, **caractérisé en ce que** le dispositif de fixation (4) comprend des moyens d'indexage (7) de type centreur (71), destinés au pré-positionnement du dispositif de fixation (4) sur le bouclier (2), et/ou des moyens d'indexage (7) de type support structurel (72) au bloc d'éclairage (3)

9. Agencement (1) selon l'une quelconque des revendications précédentes, **caractérisé en ce que** le dispositif de fixation (4) est une pièce de renfort du bouclier (2), le dispositif de fixation étant réalisé par moulage d'une matière plastique d'épaisseur comprise entre 3 mm et 1 mm, préférentiellement de 2,5 mm, l'épaisseur étant notamment supérieure à l'épaisseur du bouclier.

10. Agencement (1) selon l'une quelconque des revendications précédentes, **caractérisé en ce que** le bouclier (2) comprend une ouverture (20) au travers de laquelle est disposé le bloc d'éclairage (3) de manière sensiblement affleurante au bouclier, le bloc d'éclairage étant localement écarté d'un bord périphérique (201) de l'ouverture (20), notamment d'un bord périphérique extérieur (2011), afin de créer localement un passage au regard duquel est disposé l'entrée (51) du canal (5) d'écoulement d'air formé par l'ensemble constitué du dispositif de fixation (4) et le bouclier (2).

11. Véhicule, notamment du type d'une automobile, **caractérisé en ce qu'**il comprend un agencement (1) selon au moins l'une quelconque des revendications précédentes.
